Europäisches Patentamt

European Patent Office

Office européen des brevets

(19)

(11) EP 0 904 930 B1

(12) EUROPEAN PATENT SPECIFICATION

(45) Date of publication and mention
of the grant of the patent:
28.04.2004 Bulletin 2004/18

(51) Int Cl.7: B29C 70/54, B29C 70/46

(21) Application number: 98203190.8

(22) Date of filing: 23.09.1998

(54) **Process for manufacturing objects from fibre-reinforced plastic**

Verfahren zur Herstellung von Gegenständen aus faserverstärktem Kunststoff

Procédé de fabrication d'articles à partir d'une matière plastique renforcée de fibres

(84) Designated Contracting States:
AT BE CH DE FR GB IT LI NL SE

(30) Priority: 29.09.1997 NL 1007152

(43) Date of publication of application:
31.03.1999 Bulletin 1999/13

(73) Proprietor: DSM IP Assets B.V.
6411 TE Heerlen (NL)

(72) Inventors:
• **Dijkink, Peter**
**7707 RG Balkbrug (NL)**
• **Drogt, Berend Albert**
**8017 NX Zwolle (NL)**

(56) References cited:
EP-A- 0 322 042      US-A- 3 193 438
US-A- 3 989 781      US-A- 4 124 678
US-A- 4 942 013      US-A- 5 112 663
US-A- 5 322 665

**Description**

The invention relates to a process for manufacturing objects from fibre-reinforced plastic by placing sheet-shaped fibrous reinforcing material in the cavity of an opened mould, closing the mould and introducing a plastic into the mould, before or after the mould is closed, which plastic is absorbed by the fibrous reinforcing material, and curing the plastic.

Such a process is known from the American patent US-3,028,284. US-3, 028,284 describes a process in which fibrous reinforcing material is placed in the cavity of an opened mould, the mould is subsequently closed, after which a liquid plastic is injected into the mould cavity, which liquid plastic is absorbed by the fibrous reinforcing material, and the plastic is cured. This process is known to a person skilled in the art as 'Resin Transfer Moulding' (RTM).

Although the RTM process described in US-3, 028,284 is excellently suitable for manufacturing objects from fibre-reinforced plastic, it involves the drawback that a relatively high pressure is required to inject the liquid plastic into the mould and ensure that it is absorbed by the fibrous reinforcing material. This is the case especially when the process is used to manufacture objects having relatively large dimensions and a high concentration of fibrous reinforcing material.

A particular embodiment of such process is disclosed in GB-1266097. Said process is carried out in the cavity of a mould comprising a bottom and a top part. In a first step, the mould is in a first opened position and sheet-shaped fibrous reinforcing material and a foam layer, which has been impregnated with a liquid thermosetting resin (liquid plastic), are introduced into the cavity. The foam layer, when compressed, is capable of expelling the liquid resin restrained therein. The resin in the foam is then, preferably, partially cured, for example to the B-stage. Then, in a further step, the top mould part is moved to a second, closed final position, in which the foam layer is almost completely compressed and in which the resin has been almost completely absorbed by the fibrous reinforcing material, and then the resin is cured. Said curing is completely done in the mould at high temperatures of about 180 °C. The products so obtained have mechanical properties which are unsatisfactory as to mechanical properties, homogeneity, etc.

The process according to the invention aims to eliminate these drawbacks.

This aim is achieved as follows: In a process for manufacturing objects from fibre-reinforced plastic wherein, in a first step, into the cavity of a mould comprising a bottom and a top part, which is in a first opened position, sheet-shaped fibrous reinforcing material and means for restraining liquid plastic, which restraining means consist of sheet-shaped fibrous material having a permeability and compressibility that are substantially greater than those of the sheet-shaped fibrous reinforcing material, are introduced, and which restraining means, when compressed, are capable of expelling a liquid plastic restrained in them, and wherein the restraining means are provided with the liquid plastic and then, in a further step, the top mould part is moved to a second, closed final position, in which the restraining means are almost completely compressed and in which the liquid plastic has been almost completely absorbed by the fibrous reinforcing material, and the liquid plastic is cured, the improvement comprises, that the restraining means are provided with liquid plastic after the means have been introduced into the cavity by moving the top mould part to a third, partially closed position, which position lies between the first opened and the second closed final position, so that the restraining means are virtually not compressed, and the liquid plastic is then injected into the mould cavity so that it is largely or almost completely absorbed by the restraining means.

Introducing the means for restraining the liquid plastic into the mould ensures that the absorption of the liquid plastic by the fibrous reinforcing material can take place at substantially lower pressures than is the case in the process according to the state of the art.

A further advantage of the process according to the invention is that the amount of time required for the absorption of the liquid plastic by the fibrous reinforcing material is substantially shorter than in the known process described in US-3, 028,284. The mechanical properties of an object manufactured with the process according to the invention such as the flexural strength and the flexural rigidity and the impact resistance are moreover at least equal to the properties of objects known from the prior art.

The restraining means are provided with liquid plastic after being introduced into the cavity by moving the top mould part to a third, partially closed position, which position lies between the first opened and the second closed final position, so that the restraining means are virtually not compressed, and then the liquid plastic is then injected into the mould cavity so that it is almost completely absorbed by the restraining means.

A 'third, partially closed position of the top mould part' is understood to be a position in which the plastic injected into the mould cavity cannot escape from the mould cavity. The third position is moreover such that the fibrous reinforcing material is sufficiently clamped in the mould cavity to hold it in its place during the injection of the plastic.

Suitable means for restraining the liquid plastic must be capable of expelling the liquid plastic restrained in them when they are compressed. According to the present invention the restraining means consist of sheet-shaped fibrous material with a substantially greater permeability and compressibility than the sheet-shaped fibrous reinforcing material. In a preferred embodiment of this process the restraining means and the sheet-shaped fibrous reinforcing material are stacked in the opened mould, after which the top mould part is moved into the third, partially closed position.

Next, the liquid plastic is injected into the mould cavity, during which the liquid plastic will be almost completely absorbed by the restraining means because they have a substantially greater permeability than the fibrous reinforcing material. Subsequently moving the top mould part into the second closed final position ensures that the restraining means are compressed owing to their substantially greater compressibility, as a result of which the liquid plastic present in the restraining means is expelled and absorbed by the fibrous reinforcing material. In the final position the restraining means are present in the object in almost completely compressed condition.

The process according to the invention is thus characterised in that the restraining means consist of sheet-shaped fibrous material with a substantially greater permeability and compressibility than the sheet-shaped fibrous reinforcing material.

Using such restraining means in the process according to the invention ensures that the mechanical properties of the object manufactured with them are improved as compared with the objects according to the prior art. Because the liquid plastic is moreover far sooner present in the mould cavity than in the known process of US-3, 028,284, more time is available at an identical cycle time for the absorption of the liquid plastic by the fibrous reinforcing material. This reduces inclusions of air in the object, which is hence to the benefit of the mechanical properties.

The permeability of the fibrous (reinforcing) material is defined as follows in the context of this application. When a liquid plastic is injected into a mould cavity containing fibrous (reinforcing) material, the relation between the flow rate per unit of flow area (q) and a pressure gradient applied over the fibrous (reinforcing) material (dp/ds) is given by Darcy's law:

$$q = K . dp/ds$$

where K is the permeability of the fibrous (reinforcing) material in the chosen flow direction (s). Darcy's law is commonly known to a person skilled in the art and is for example described in 'Dynamics of Fluids in Porous Media' by J. Baer, American Elsevier Publishing Company, ISBN 0-444-00114-X, pp. 119-194.

The compressibility of the sheet-shaped fibrous (reinforcing) material is measured by stacking a number of sheets of the material on top of one another and subsequently compressing the stack obtained between the platens of a press. The compressibility is defined as the (average) pressure (in MPa) required per mm compression of the stack until complete compression is realised.

Preferably the ratio of the permeability of the fibrous material and the fibrous reinforcing material is chosen to be greater than 2, more preferably greater than 5, most preferably greater than 10.

It is advantageous to place the restraining means in selected places in the mould cavity. This way the distribution of the liquid plastic across the mould cavity in the further step of the embodiments of the process according to the invention can be controlled. It is for example possible to place a more than average volume of restraining means in places in the object to be manufactured where a relatively large amount of liquid plastic must be present. Places where a relatively large amount of plastic must be present may for example be determined by demands imposed on the object's surface in those places.

The restraining means and the sheet-shaped fibrous reinforcing material are preferably stacked on top of one another in the opened mould cavity so that the restraining means are in the middle of the stack. Because the restraining means will preferably permanently form part of the object manufactured using preferred embodiments of the process according to the invention, such a stack presents the major advantage that the mechanical properties in flexure are at least the same as those of the same object manufactured according to the known processes.

In a further advantageous embodiment of the process according to the invention, in the first step, the restraining means and the sheet-shaped fibrous reinforcing material are stacked on top of one another in the opened mould cavity so that the stack is symmetrical relative to the centre plane. This ensures a good distribution of the liquid plastic across the object's thickness.

The injection of the liquid plastic into the mould cavity is in the known process usually realised by creating a difference in pressure (the 'injection pressure'). This injection pressure is in practice usually chosen to be between 0.05 and 1 MPa, depending on for example the dimensions of the object to be manufactured and the viscosity of the liquid plastic. It will be clear that the mould must be capable of resisting the injection pressure. Because the top mould part must, at relatively high concentrations of fibrous (reinforcing) material, moreover compress this material, the pressure that is to hold the mould parts together will usually be higher than the injection pressure. In the case of objects having relatively small dimensions, for example an area of less than 1 $m^2$, it is also possible to suck the liquid plastic into the mould cavity by creating a (partial) vacuum in the mould cavity. This process is known to a person skilled in the art under the name of 'Vacuum Assisted Resin Infusion' (VARI).

The process according to the invention presents the additional advantage that the VARI technique is also very suitable for manufacturing objects having relatively large dimensions (areas of more than 2 $m^2$) because the injection pressures required are much lower than in the known process.

In an even more preferred embodiment of the process according to the invention the top mould part comprises a flexible film, which together with the bottom mould part forms a mould cavity that can be sealed more or less air-tight, the top mould part being moved into the first, second or third position by creating a partial vacuum in the mould cavity, in accordance with the desired position.

Preferably material like glass fibre, carbon fibre, aramide fibre, highly oriented polyethylene fibre and the like is chosen as the fibrous (reinforcing) material. Sheet-shaped (reinforcing) materials that are suitable for use in the process according to the invention are woven fabrics, knitted fabrics, (circular) braided fabrics and mats based on fibrous material and a thermoplastic binder. The mats may contain both discontinuous and continuous fibres. By using the process according to the invention it is now possible to manufacture objects having relatively large dimensions and a high concentration of fibrous reinforcing material, for example of 50-70 vol.% relative to the object's total volume. It is of course also possible to carry out the process according to the invention using less fibrous reinforcing material. Usually more than 30 vol.% fibrous reinforcing material is preferably used.

Sheet-shaped fibrous material that is suitable for use as a restraining means is any woven fabric, mat, knitted fabric and/or braided fabric having an areal density that is preferably lower than the areal density of the fibrous reinforcing material also to be used in the object to be manufactured. Suitable fibrous materials are for example glass, polyester, polyacrylic, polyethylene, polypropylene, etc. Particularly suitable are the mats known to a person skilled in the art as surfacing mats, for example obtainable from Lantor under the tradename of Firet™.

Suitable areal densities for the restraining means lie for example between 10 and 300 $g/m^2$. The areal density of the sheet-shaped fibrous material is preferably lower than 150 $g/m^2$, most preferably lower than 100 $g/m^2$. The permeability of the sheet-shaped fibrous material suitable for use as the restraining means is furthermore preferably greater than the permeability of the fibrous reinforcing material, more preferably twice its value, even more preferably 5 times its value, most preferably 10 times its value.

The amount of restraining means suitable for use is dependent on, for example, the amount of plastic the object is required to contain, the amount of plastic that can be absorbed by the restraining means and on the amount of fibrous reinforcing material in the end article to be manufactured.

Any thermoplastic and/or thermosetting plastic commonly used in the known RTM process can for example be used as the plastic. Preferably use is made of a thermosetting plastic, because they usually have a viscosity low enough to be able to effectively impregnate the fibrous reinforcing material. Examples of suitable thermosetting plastics are epoxy resins, unsaturated polyester resins, vinyl-ester resins, phenolic resins, bismaleimide resins and the like.

Preferably an unsaturated polyester resin is used in the process according to the invention. Such a polyester resin comprises a polyester dissolved in a copolymerisable monomer. The monomer also has a viscosity-reducing effect. The polyester is usually obtained through reaction of organic compounds containing carboxyl and alcohol groups. At least some of the starting compounds contain unsaturated compounds. Unsaturated polyesters are usually composed from one or more aliphatic and/or cycloaliphatic, mono-, di-, and/or polyvalent alcohols and one or more aliphatic, cycloaliphatic and/or aromatic di- or polyvalent carboxylic acids and, optionally, monocarboxylic acids and/or the esters and anhydrides derived therefrom.

Suitable alcohols preferably contain fewer than 30 carbon atoms. Examples of suitable alcohols are benzyl alcohol, ethylene glycol, diethylene glycol, triethylene glycol, propylene glycol, dipropylene glycol, neopentyl glycol, butanediol, pentanediol, hexanediol, dimethylolcyclohexane, glycerol, trimethylolpropane, pentaerythritol, dipentaerythritol, hydrated bisphenol-A, 2,2-bis-(2-hydroxyethoxy)phenylpropane and/or 2,2-bis-(2-hydroxypropoxy)phenylpropane. Instead of or in addition to the alcohol compound(s) use can be made of one or more epoxy compounds, for example ethylene oxide, propylene oxide and/or allylglycidylether or dicyclopentadiene.

Examples of suitable di- or polyvalent carboxylic acids are fumaric acid, maleic acid, chloro- maleic acid, itaconic acid, citraconic acid, malonic acid, succinic acid, glutaric acid, methylglutaric acid, adipic acid, sebacic acid, 1,4-cyclohexanedicarboxylic acid, phthalic acid, isophthalic acid, terephthalic acid, trimellitic acid, dihydrophthalic acid, tetrahydrophthalic acid, hexahydrophthalic acid, tetrachlorophthalic acid, endomethylene tetrahydrophthalic acid (HIMIC), hexachloroendomethylene tetrahydrophthalic acid and/or the corresponding esters or anhydrides. The unsaturated carboxylic acids to be used are preferably ethylenically unsaturated carboxylic acids, in particular a,b-ethylenically unsaturated carboxylic acids.

Other polyesters suitable for the resin composition according to the invention are vinyl-ester polymers. Vinyl-ester polymers, also known under the name of epoxy (meth)acrylates, are the addition products of polyepoxides and unsaturated carboxylic acids, preferably acrylic acid and methacrylic acid, optionally substituted with C2-C4 alkyl groups. Suitable polyepoxides are epoxy novolak resins, in particular polyepoxides based on bisphenol A. A class of vinyl-ester polymers that is also suitable consists of the esterification products of alkoxylated bisphenol A with (meth)acrylic acid.

Other polyesters that are suitable for the resin composition according to the invention are vinyl-ester-urethane polymers. Vinyl-ester-urethane polymers, also known under the name of urethane (meth)acrylates, are the addition products of a polyvalent isocyanate, a polyvalent alcohol and/or amine and a hydroxyalkyl (meth)acrylate.

The monomer that is copolymerisable with the polyester contains one or more vinyl groups and usually fewer than 50 carbon atoms. Suitable monomers are for example of the vinylaromatic, vinyl-ether, vinyl-ester, acrylate and/or allyl type. Preferably the monomer is vinylaromatic.

Vinylaromatic monomers have for example been chosen from the group containing styrene, a-methylstyrene, o-, m-, p-methylstyrene, p-chlorostyrene, t-butylstyrene, divinyl benzene, bromostyrene, vinyl naphthalene, a-chlorostyrene and divinyl naphthalene. Preferably styrene is used.

Acrylate compounds are for example chosen from the group containing methyl, ethyl, propyl, isopropyl, butyl, isobutyl, phenyl and benzyl acrylate or methacrylate, 2-ethylhexyl (meth)acrylate, dihydrocyclopentadiene acrylate, cyclohexyl (meth)acrylate, butanediol (meth)acrylate, butanediol di(meth)acrylate, (meth)acrylamide, the reaction products of (meth)acrylic acid and phenyl- or cresylglycidyl ethers, propylene glycol di(meth)acrylate, di- and tripropylene glycol di(meth)acrylate, hexanediol di(meth)acrylate, trimethylolpropane tri(meth)acrylate. Preferably hydroxyethylmethacrylate and hydroxypropylmethacrylate are used.

Vinyl-ether, vinyl-ester and allyl compounds are for example chosen from the group containing allyl phthalate, diallyl phthalate, diallyl isophthlate, triallyl cyanurate, diallyl terephthalate, vinyl acetate, vinyl propionate, vinyl pivalate, vinyl ether, vinyl versatate, vinyl propylol ether, divinyl ether, vinyl butylol ether and vinyl benzyl alcohol ethers.

Resins that are particularly suitable for the process according to the invention are resins that form a polyester-urethane hybrid network by causing low-molecular starting compounds to react with one another in situ. A particularly suitable example of this is described in EP-B-0 441 416.

It is to be noted that in US patent 4,124,678 a method for making tubular articles of tortuous configuration in which resin-starved areas are prevented, especially in curves and transitions in cross section size. This is reached by placing additional reinforcement material at these locations, whereby part of the reinforcement material is impregnated with a resin. By placing the reinforcement material over an expandable core after which the impregnated layer is pressed against the remaining reinforcement material resulting in flow of the resin through the reinforcement material at selective places. This method results in tubular articles of tortuous configuration, which are reinforced selectively in contrast to the present invention whereby articles are prepared that are homogeneously cured.

The objects obtained with the process according to the invention can be used for example in the automotive industry, the aircraft industry, boat construction and other branches of industry in which relatively large moulded parts with good mechanical properties are required.

The invention will be further elucidated with reference to the examples, without incidentally being limited thereto.

Example I

The following were successively introduced into a steel plate-shaped mould (dimensions 300 x 300 x 2.4 mm):

(A) 7 layers of reinforcing mat based on glass fibre from Verseidag, type Chemtex™ W2420, areal density of 200 g/m$^2$;
(B) 1 layer of fibre mat based on polyacrylic fibres (as the restraining means) from Lantor BV, type Firet™ D7760, having an areal density of 60 g/m$^2$ and an uncompressed thickness of 2 mm;
(A) another 7 layers of reinforcing mat (A).

The mould was then partially closed to a mould opening of 1.5 mm (total height of the mould cavity was 3.9 mm). In this third position of the mould the mat (B) is virtually not compressed.

Then, at a mould temperature of 60°C, an unsaturated polyester resin, type Synolite™ 0529-N-2, from DSM-BASF Structural Resins, was injected into the mould cavity via a sprue (line injection on 1 side of the mould, flow path 300 mm). There was an air ventilation opening on the opposite side of the mould. A Hypaject™ injection machine from Plastech was used for the injection. A constant injection pressure of 0.1 MPa was used during the injection. The injection pressure required is pneumatically controlled by the injection machine, on which it can be read. The amount of time required for the injection was measured with the aid of a stopwatch. The injection time was defined as the amount of time required to fill the mould with the required amount of resin. The required amount of resin can be determined beforehand and was in this example approx. 120 ml. The corresponding fibre content by volume was 45 vol.%.

The results of the injection test are given in Table 1.

After the injection, which took about 40 seconds, the mould was closed further to a mould opening = 0 mm (total height of the mould cavity was 2.4 mm).

The mould was then kept at 60°C for 15 minutes. After that, the cured plate was removed from the mould and cured further for 24 hours at 60°C and 24 hours at 80°C. Rod specimens were produced from this plate for the purpose of measuring the flexural strength and flexural rigidity (according to ISO 178) and the Interiaminar Shear Strength (ILSS, according to ASTM D2344).

Example II

The following were successively introduced into a steel plate-shaped mould (dimensions 300 x 300 x 2.4 mm):

(A) 7 layers of reinforcing mat based on glass fibre from Verseidag, type Chemtex™ W2420, areal density of 200 g/m$^2$;
(B) 1 layer of fibre mat based on polyacrylic fibres (as the restraining means) from Lantor BV, type Firet™ D7760, having an areal density of 60 g/m$^2$ and an uncompressed thickness of 2 mm;
(A) another 7 layers of reinforcing mat (A).

The mould was then partially closed to a mould opening of 1.5 mm (total height of the mould cavity was 3.9 mm). In this third position of the mould the mat (B) is virtually not compressed.

Then, at a mould temperature of 60°C, an unsaturated polyester resin, type Synolite™ 0529-N-2, from DSM-BASF Structural Resins, was injected into the mould cavity via a sprue (line injection on 1 side of the mould, flow path 300 mm). There was an air ventilation opening on the opposite side of the mould. A Hypaject™ injection machine from Plastech was used for the injection. A constant injection pressure of 0.2 MPa was used during the injection. The amount of time required for the injection was measured with the aid of a stopwatch. The amount of resin required was approx. 120 ml. The corresponding glass fibre content by volume was 45 vol.%.

The results of the injection test are given in Table 1.

After the injection, which took about 19 seconds, the mould was closed further to a mould opening = 0 mm (total height of the mould cavity was 2.4 mm).

The mould was then kept at 60°C for 15 minutes. After that, the cured plate was removed from the mould and cured further for 24 hours at 60°C and 24 hours at 80°C. Rod specimens were produced from this plate for the purpose of measuring the flexural strength and flexural rigidity (according to ISO 178) and the Interlaminar Shear Strength (ILSS, according to ASTM D2344).

Example III

The following were successively introduced into a steel plate-shaped mould (dimensions 300 x 300 x 2.4 mm):

(A) 7 layers of reinforcing mat based on glass fibre from Verseidag, type Chemtex™ W2420, areal density of 200 g/m$^2$;
(B) 1 layer of fibre mat based on polyacrylic fibres (as the restraining means) from Lantor BV, type Firet™ D7760, having an areal density of 60 g/m$^2$ and an uncompressed thickness of 2 mm;
(A) another 7 layers of reinforcing mat (A).

The fibre mat (B) was first provided with approx. 120 ml of an unsaturated polyester resin, type Synolite™ 0529-N-2, from DSM-BASF Structural Resins. This resin was infused in the fibre mat (B) by hand, by means of a roller.

The mould was then completely closed to a mould opening = 0 mm (total height of the mould cavity was 2.4 mm). The fibre mat (B) was in the process almost completely compressed to a measured height (of the cured plate) of on average less than 0.2 mm. The corresponding glass fibre content by volume was 45 vol.%. The mould was then kept at 60°C for 15 minutes. After that the cured plate was removed from the mould and cured further for 24 hours at 60°C and 24 hours at 80°C. Visual inspection showed that all the resin had homogeneously spread across the plate. Rod specimens were produced from the plate thus obtained for the purpose of measuring the flexural strength and flexural rigidity (according to ISO 178) and the Interlaminar Shear Strength (ILSS, according to ASTM D2344).

Comparative Experiment A

14 layers of reinforcing mat based on glass fibre from Verseidag, type Chemtex™ W2420, areal density of 200 g/m$^2$, were introduced into a steel plate-shaped mould (dimensions 300 x 300 x 2.4 mm). The mould was then closed completely to a mould opening = 0 mm (total height of the mould cavity was 2.4 mm).

Then, at a mould temperature of 60°C, an unsaturated polyester resin, type Synolite™ 0529-N-2, from DSM-BASF Structural Resins, was injected into the mould cavity via a sprue (line injection on 1 side of the mould, flow path 300 mm). There was an air ventilation opening on the opposite side of the mould. A Hypaject™ injection machine from Plastech was used for the injection. A constant injection pressure of 0.4 MPa was used during the injection. The amount of time required for the injection was measured with the aid of a stopwatch. The amount of resin required was approx. 120 ml. The corresponding glass fibre content by volume was 45 vol.%.

The results of the injection test are given in Table 1.

The mould was kept at 60°C for another 15 minutes after the injection. After that the cured plate was removed from the mould and was cured further for 24 hours at 60°C and 24 hours at 80°C. Rod specimens were produced from the plate thus obtained for the purpose of measuring the flexural strength and flexural rigidity (according to ISO 178) and the Interlaminar Shear Strength (ILSS, according to ASTM D2344).

Table 1:

| Results of the resin-injection tests | | | |
|---|---|---|---|
| Example | I | II | A |
| Number of layers of glass mat (A) | 14 | 14 | 14 |
| Number of layers of mat (B) | 1 | 1 | 0 |
| Mould opening (mm) | 1.5 | 1.5 | 0 |
| Injection pressure (MPa) | 0.1 | 0.2 | 0.4 |
| Injection time (sec.) | 40 | 19 | 60 |

Table 2:

| Mechanical properties | | | | |
|---|---|---|---|---|
| Example | I | II | III | A |
| Flexural strength (MPa) | 354 | 300 | 367 | 437 |
| Modulus in flexure (GPa) | 19.3 | 20.3 | 20.4 | 20.2 |
| ILSS (MPa) | 29.6 | 28.8 | 31.6 | 31.4 |

The results obtained show that the injection time is substantially shorter when use is made of the process according to the invention. The injection pressure required is also substantially lower. This implies major advantages, especially in the manufacture of end articles having large dimensions of for example several m.

End articles manufactured according to the process according to the invention moreover prove to have mechanical properties comparable with those manufactured using the process according to the state of the art.

## Claims

1. Process for manufacturing objects from fibre-reinforced plastic, wherein, in a first step, into the cavity of a mould comprising a bottom and a top part, which is in a first opened position, sheet-shaped fibrous reinforcing material and means for restraining liquid plastic, which restraining means consist of sheet-shaped fibrous material having a permeability and compressibility that are substantially greater than those of the sheet-shaped fibrous reinforcing material, are introduced, and which restraining means, when compressed, are capable of expelling a liquid plastic restrained in them, and wherein the restraining means are provided with the liquid plastic and then, in a further step, the top mould part is moved to a second, closed final position, in which the restraining means are almost completely compressed and in which the liquid plastic has been almost completely absorbed by the fibrous reinforcing material, and the liquid plastic is cured, **characterised in that** the restraining means are provided with liquid plastic after the means have been introduced into the cavity by moving the top mould part to a third, partially closed position, which position lies between the first opened and the second closed final position, so that the restraining means are virtually not compressed, and the liquid plastic is then injected into the mould cavity so that it is largely or almost completely absorbed by the restraining means.

2. Process according to Claim 1, **characterised in that** the ratio of the permeability of the fibrous material and the fibrous reinforcing material is greater than 2.

3. Process according to Claim 2, **characterised in that** the ratio of the permeability of the fibrous material and the fibrous reinforcing material is greater than 10.

4. Process according to any one of Claims 1 to 3, **characterised in that** the restraining means are in the first step placed in the mould cavity in selected places.

5. Process according to any one of Claims 1 to 4, **characterised in that** the restraining means and the sheet-shaped fibrous reinforcing material are in the first step stacked on top of one another in the opened mould cavity so that the restraining means are in the middle of the stack.

6. Process according to any one of Claims 1 to 5, **characterised in that** the restraining means and the sheet-shaped fibrous reinforcing material are in the first step stacked on top of one another in the opened mould cavity so that the stack is symmetrical relative to the centre plane.

7. Process according to any one of Claims 1 to 6, **characterised in that** the top mould part comprises a flexible film which together with the bottom mould part forms a mould cavity that can be sealed more or less air-tight, the top mould part being moved into the first, second or third position by creating a vacuum in the mould cavity, in accordance with the desired position.

**Patentansprüche**

1. Verfahren zur Herstellung von Gegenständen aus faserverstärktem Kunststoff, wobei in einem ersten Schritt in den Hohlraum einer Form, die ein Unter- und ein Oberteil, das in einer ersten geöffneten Stellung vorliegt, umfaßt, schichtförmiges Faserverstärkungsmaterial und Mittel zum Zurückhalten von flüssigem Kunststoff, wobei die Mittel zum Zurückhalten aus schichtförmigem Fasermaterial mit einer Durchlässigkeit und Verdichtbarkeit bestehen, welche im wesentlichen größer als die des schichtförmigen Faserverstärkungsmaterials sind, eingebracht werden, und wobei die Mittel zum Zurückhalten, wenn sie verdichtet werden, dazu fähig sind, einen in ihnen zurückgehaltenen flüssigen Kunststoff abzugeben, und wobei die Mittel zum Zurückhalten mit dem flüssigen Kunststoff bereitgestellt werden, und anschließend, in einem weiteren Schritt das Oberteil der Form in eine zweite, geschlossene Endstellung bewegt wird, in welcher die Mittel zum Zurückhalten nahezu vollständig verdichtet sind und in welcher der flüssige Kunststoff nahezu vollständig von dem Faserverstärkungsmaterial absorbiert worden ist und der flüssige Kunststoff gehärtet wird, **dadurch gekennzeichnet, daß** die Mittel zum Zurückhalten, nachdem die Mittel in den Hohlraum eingebracht worden sind, durch Bewegen des Oberteils der Form in eine dritte, teilweise geschlossene Stellung, wobei die Stellung zwischen der ersten geöffneten und der zweiten geschlossenen Endstellung liegt, so daß die Mittel zum Zurückhalten praktisch nicht verdichtet sind, und anschließendes Einspritzen des flüssigen Kunststoffes derart in den Hohlraum der Form, daß er großteils oder fast vollständig durch die Mittel zum Zurückhalten absorbiert wird, mit flüssigem Kunststoff versehen werden.

2. Verfahren nach Anspruch 1, **dadurch gekennzeichnet, daß** das Verhältnis der Durchlässigkeit des Fasermaterials und des Faserverstärkungsmaterials größer als 2 ist.

3. Verfahren nach Anspruch 2, **dadurch gekennzeichnet, daß** das Verhältnis der Durchlässigkeit des Fasermaterials und des Faserverstärkungsmaterials größer als 10 ist.

4. Verfahren nach einem der Ansprüche 1 bis 3, **dadurch gekennzeichnet, daß** die Mittel zum Zurückhalten in dem ersten Schritt an ausgewählten Stellen in den Hohlraum der Form eingebracht werden.

5. Verfahren nach einem der Ansprüche 1 bis 4, **dadurch gekennzeichnet, daß** die Mittel zum Zurückhalten und das schichtförmige Faserverstärkungsmaterial in dem ersten Schritt in dem geöffneten Hohlraum der Form derart aufeinander gestapelt werden, daß die Mittel zum Zurückhalten in der Mitte des Stapels vorliegen.

6. Verfahren nach einem der Ansprüche 1 bis 5, **dadurch gekennzeichnet, daß** die Mittel zum Zurückhalten und das schichtförmige Faserverstärkungsmaterial in dem ersten Schritt in dem geöffneten Hohlraum der Form derart aufeinander gestapelt werden, daß der Stapel relativ zu der Mittelebene symmetrisch ist.

7. Verfahren nach einem der Ansprüche 1 bis 6, **dadurch gekennzeichnet, daß** das Oberteil der Form einen flexiblen Film umfaßt, der zusammen mit dem Unterteil der Form einen Formhohlraum bildet, der mehr oder weniger luftdicht verschlossen werden kann, wobei das Oberteil der Form durch das Erzeugen eines Vakuums in dem Hohlraum der Form in die erste, zweite oder dritte Stellung, gemäß der erwünschten Stellung, bewegt wird.

**EP 0 904 930 B1**

**Revendications**

1. Procédé de fabrication d'articles à partir d'une matière plastique renforcée de fibres, dans lequel, dans une première étape, on introduit, dans la cavité d'un moule comprenant une partie fond et une partie supérieure qui est dans une première position ouverte, la matière de renforcement de fibres en forme de feuille et les moyens de restriction du plastique liquide, lesdits moyens de restriction se composant de matière fibreuse en forme de feuille ayant une perméabilité et une compressabilité qui sont sensiblement supérieures à celles de la matière de renforcement de fibres en forme de feuilles, et lesdits moyens de restriction, une fois compressés, sont capables d'expulser un plastique liquide restreint dans ceux-ci et dans lequel les moyens de restriction sont chargés de plastique liquide, et puis dans une autre étape, la partie moule supérieure est déplacée en une seconde position finale fermée dans laquelle les moyens de restriction sont presque complètement compressés et dans laquelle le plastique liquide a été presque complètement absorbé par la matière de renforcement de fibres et le plastique liquide est durci, **caractérisé en ce que** les moyens de restriction sont chargés de plastique liquide une fois les moyens introduits dans la cavité par déplacement de la partie supérieure du moule en une troisième position partiellement fermée, ladite position se situe entre la première position ouverte et la seconde position fermée finale de sorte que les moyens de restriction sont virtuellement non compressés, et le plastique liquide est ensuite injecté dans la cavité du moule de sorte qu'il est largement ou presque complètement absorbé par les moyens de restriction.

2. Procédé selon la revendication 1, **caractérisé en ce que** le rapport de la perméabilité de la matière fibreuse et de la matière de renforcement de fibres est supérieur à 2.

3. Procédé selon la revendication 2, **caractérisé en ce que** le rapport de la perméabilité de la matière fibreuse et de la matière de renforcement de fibres est supérieur à 10.

4. Procédé selon l'une quelconque des revendications 1 à 3, **caractérisé en ce que** les moyens de restriction sont placés, dans la première étape, dans la cavité du moule dans des endroits sélectionnés.

5. Procédé selon l'une quelconque des revendications 1 à 4, **caractérisé en ce que** les moyens de restriction et la matière de renforcement de fibres en forme de feuille sont empilés, dans la première étape, les uns sur les autres dans la cavité ouverte du moule de sorte que les moyens de restriction soient dans le milieu de la pile.

6. Procédé selon l'une quelconque des revendications 1 à 5, **caractérisé en ce que** les moyens de restriction et la matière de renforcement de fibres en forme de feuille sont empilés, dans la première étape, les uns sur les autres dans la cavité ouverte du moule de sorte que la pile soit symétrique par rapport au plan central.

7. Procédé selon l'une quelconque des revendications 1 à 6, **caractérisé en ce que** la partie supérieure du moule comprend un film flexible qui, avec la partie fond du moule, forme une cavité de moulage qui peut être fermée de manière plus ou moins étanche à l'air, la partie supérieure du moule étant déplacée en la première, seconde ou troisième position en créant un vide dans la cavité du moule, selon la position désirée.